# EUROPÄISCHE PATENTSCHRIFT

(11) **EP 4 450 274 B1**
(45) Veröffentlichungstag und Bekanntmachung des Hinweises auf die Patenterteilung: **11.11.2026**
(21) Anmeldenummer: 24171096.1
(22) Anmeldetag: 18.04.2024
(51) Int. Cl.: C01B 33/158, C04B 30/02, E04B 1/90, F16L 59/06

(54) **ISOLATIONSMATERIAL ZUR AKUSTISCHEN UND THERMISCHEN ISOLATION AUS FLEXIBLEM FASERVERBUND UND HYDROPHOBEM GRANULAT**
INSULATION MATERIAL FOR ACOUSTIC AND THERMAL INSULATION MADE OF FLEXIBLE FIBRE COMPOSITE AND HYDROPHOBIC GRANULATE
MATÉRIAU ISOLANT POUR ISOLATION ACOUSTIQUE ET THERMIQUE COMPOSÉ DE FIBRES COMPOSITES FLEXIBLES ET DE GRANULÉS HYDROPHOBES

(30) Priorität: 20.04.2023 DE 102023110097
(43) Veröffentlichungstag der Anmeldung: 23.10.2024
(73) Patentinhaber: Deutsches Zentrum für Luft- und Raumfahrt e.V., 53227 Bonn (DE)
(72) Erfinder: Milow, Barbara, 51147 Köln (DE); Rege, Ameya, 51147 Köln (DE); Okumus, Emrah, 51147 Köln (DE); Vöpel, Pascal, 51147 Köln (DE); Niemeyer, Philipp, 53840 Troisdorf (DE); Abawi, Yama, 20099 Hamburg (DE); Gleine, Wolfgang, 20099 Hamburg (DE)
(74) Vertreter: dompatent

(56) Entgegenhaltungen:
- EP-A1- 3 536 494
- EP-B1- 0 799 343
- EP-B1- 0 868 556
- EP-B1- 2 638 217
- WO-A1-2021/259867
- DE-A1- 102013 107 727
- US-B2- 7 468 205

## Beschreibung

Die vorliegende Erfindung betrifft ein Isolationsmaterial zur akustischen und thermischen Isolation aus flexiblem Faserverbund und hydrophobem Granulat, ein Verfahren zu dessen Herstellung sowie dessen Verwendung insbesondere als Isolationsmaterial im Flugzeugbau. Das Isolationsmaterial liegt insbesondere in Form eines Kissens vor mit einer äußeren Hülle aus einem flexiblen Faser-Aerogel-Verbund und einem Füllstoff aus hydrophobem, strukturiertem, porösen Kleinstmaterialien, wie Aerogelgranulat oder porösem (Oxid-)Granulat, welches in dem Kissen frei beweglich ist.

Aktuelle Isolationsmaterialien im Flugzeugbau werden durch textilartige Glasfasermatten realisiert, die in verschiedenen Größen vorkonfektioniert und jeweils mit einer Kunststofffolie umhüllt sind. Diese Materialien übernehmen in einer Flugzeugkabinenwand zwischen Flugzeugrumpfstruktur und Kabinenwandpaneel eine thermische und akustische Isolationswirkung. Die eingesetzten Glasfasermatten besitzen Eigenschaften zur Erfüllung wichtiger Anforderungen, wie eine hinreichende thermische Isolation, ein sehr geringes Flächengewicht, Unbrennbarkeit, Vermeidung toxischer Gasemissionen bei Feuer, einfache und schnelle Installierbarkeit sowie hinreichende Schallabsorption für Frequenzen oberhalb von 700 Hz. Allerdings weisen die Glasfasermatten auch Defizite auf, die insbesondere bei einer Schallabsorption im niedrigeren Frequenzbereich unterhalb von 700 Hz als auch bei der Aufnahme und Speicherung von kondensierter Luftfeuchtigkeit besonders auffällig sind.

Aerogele erfüllen prinzipiell sehr viele der genannten Anforderungen und weisen potenziell höhere Schallabsorptionseigenschaften im niedrigen Frequenzbereich, einen höheren thermischen Widerstand als auch eine reduzierte Feuchtigkeitsaufnahme im Vergleich zu Glaswollmatten auf. Ein wichtiges Defizit bei den bisher betrachteten Aerogel-Materialeigenschaften ist deren im Vergleich zur Glaswolle höhere Dichte, die zu höheren Flächengewichten bei aus Aerogel gefertigten Isoliermatten führen kann. Aktuelle Forschungsanstrengungen zielen darauf ab, für eine Anwendung im Flugzeug geeignete Isoliermatten aus Aerogel zu entwickeln, die neben den genannten wünschenswerten Eigenschaften zusätzlich die Anforderungen an deren maximal tolerierbares Flächengewicht bei robusten mechanischen Eigenschaften erfüllen.

Die aktuell verwendeten Materialien zeigen diverse Nachteile: Durch hohe Luftfeuchtigkeit sammelt sich Feuchtigkeit in den Matten, welche auskondensiert und letzten Endes gefriert. Durch die Eisbildung werden die thermischen und akustischen Eigenschaften der Glasfasern deutlich verschlechtert. Hinzu kommt, dass die mechanische Einwirkung des Eises auf die Glasfasern zu Schäden an diesen führt. Über einen längeren Zeitraum werden die Faserpakete somit zerstört. Das eingelagerte Eis führt zudem zu einer signifikanten Gewichtserhöhung und damit zu einem erhöhten Treibstoffverbrauch. Durch die permanent andauernde Feuchtigkeit in den Fasermatten kann es zu Schimmelbildung kommen. Das vollständige Abtrocknen des Isolationsmaterials ist nur schwer realisierbar.

Die aktuell verwendeten Materialien reichen teilweise nicht mehr für die neuen umstrukturierten Anwendungsanforderungen aus. Eine Nach-/Umrüstung wäre ohnehin notwendig. Momentan verwendete Isolationsmaterialien auf Basis von Aerogelen sind häufig in den Eigenschaften limitiert. Zum einen bestehen Fasermatten, welche mit einem Aerogel gefüllt sind. Das Aerogel befindet sich in den Zwischenräumen der Fasern und das gesamte Material tendiert stark zur Staubbildung. Materialien, welche andererseits auf Basis von Granulaten hergestellt werden, benötigen eine mechanisch stabilisierende Struktur, wie Waben oder Doppelstegplatten oder ähnliches. Dies führt jedoch dazu, dass die Bauteile häufig in der Anwendungsvielfalt limitiert sind. Eine Kombination aus thermischer und effektiver akustischer Isolation konnte bis dato nicht realisiert werden. Aus dem Stand der Technik bekannte flexible Aerogele auf Silicabasis zeigen ein schnelles Versagen unter Zugbelastung. Dies liegt unter anderem an einer sehr porösen Oberfläche und daraus resultierenden Kerbungen, welche eine direkte Krafteinleitung in das Material bedingen.

EP 3 042 884 A1 beschreibt flexible Komposite auf Basis von Aerogelen. Dabei wird ein Verbund aus Silica-Aerogel und einem makroporösen dreidimensionalen Fasernetzwerk gebildet. Rege & Voepel et al. (Temperature-Dependent Stiffening and Inelastic Behavior of Newly Synthesized Fiber-Reinforced Super Flexible Silica Aerogels. Materials 2019, 12, 2878. https://doi.org/10.3390/ma12182878) beschreiben die mechanischen Eigenschaften dieser Verbunde, wonach eine reversible Kompression bis zu 80% möglich ist. Die Faserverbundmaterialien zeigen eine Wärmeleitfähigkeit von circa 32 mW / K m. Die Faserverstärkung zeigt einen verschwindend geringen Einfluss auf die Wärmeleitfähigkeit.

Weiterer Stand der Technik ist aus DE10 2013 107727 bekannt.

Granulare Silica-Aerogel-Materialien oder poröse Oxide sind am Markt erhältlich und werden beispielsweise durch die Firma Cabot oder Evonik produziert. Derartige Materialien zeigen eine Wärmeleitfähigkeit in der Schüttung von circa 20 mW/K m. Es sind unterschiedliche Klassen am Markt, welche sich ausschließlich durch die Partikelgröße unterschieden. Die Firma Cabot bietet beispielsweise drei unterschiedliche Größenverteilungen an.

Der vorliegenden Erfindung liegt die Aufgabenstellung zugrunde, Materialien zur thermischen und akustischen Isolation, insbesondere für den Flugzeugbau, bereitzustellen, mit denen die zuvor genannten Nachteile aus dem Stand der Technik vermieden werden. Insbesondere sollen Materialien bereitgestellt werden, die verbesserte Isolationseigenschaften im Vergleich zu Glaswolle, dem Stand der Technik im Flugzeugbau, aufweisen, wie beispielsweise eine verringerte Wasseraufnahme und eine vergleichsweise hohe Schallabsorption, insbesondere im Frequenzbereich unterhalb von 700 Hz, bei gleichzeitig niedrigem Flächengewicht.

In einer ersten Ausführungsform gemäß Anspruch 1 wird diese Aufgabenstellung gelöst durch ein Isolationsmaterial, welches eine hydrophobe Füllung und/oder ein flexibles Faserverbundmaterial umfasst, wobei die Füllung und/oder die Fasern von dem flexiblen Faserverbundmaterial teilweise oder vollständig umschlossen sind. Bevorzugt umfasst die hydrophobe Füllung aus Kleinstmaterial ein hydrophobes Aerogelgranulat, Aerogel-Aerogelkompositpartikel, Aerogel-Aerogelkompositfasern oder ein poröses Oxidgranulat oder besteht daraus. Letztere sind insbesondere in der DE 10 2022 124 358 A1 beschrieben. Erfindungsgemäß umfasst das flexible Faserverbundmaterial ein flexibles Faser-Aerogel-Komposit oder besteht daraus.

Untersuchungen zum bloßen Einfluss der Hydrophobizität auf die Akustik sind nicht bekannt. Hydrophile Materialien machen im Kontext der Anwendung jedoch keinen Sinn, da diese durch eventuelle Wassereinlagerung zerstört und ihre Eigenschaften verlieren würden.

Überraschenderweise hat sich gezeigt, dass das erfindungsgemäße Isolationsmaterial eine gegenüber dem Stand der Technik und insbesondere Glasfasermatten sehr geringe Wasseraufnahme und eine vergleichsweise hohe Schallabsorption insbesondere im Frequenzbereich unterhalb von 700 Hz aufweist. Durch die geringe Wasseraufnahme wird eine Wasseransammlung und damit insbesondere bei Einsatz im Flugzeugbau die Bildung von Eis verhindert. Durch die granulare Struktur können akustische Spektren gezielt abgedeckt werden, was bei Fasersystemen nicht der Fall ist. Dabei hat sich gezeigt, dass Absorptionsspektren unterschiedlicher Granulatschüttungen auch unterschiedliche Maxima in der Absorption zeigen. Das flexible Faserverbundmaterial (insbesondere das flexible Aerogel) im Verbund verhindert die Abnutzung des Isolationsmaterials auf Grund der Kombination aus Feuchtigkeits-und Kälteeinwirkung wie es im aktuellen Stand der Technik (Glasfasermatte) vorkommen kann. Die Faserverstärkung verbessert die mechanischen Eigenschaften des Isolationsmaterials. Dabei weist das Material ein mit Glasfasermatten vergleichbares Flächengewicht auf.

In der erfindungsgemäßen Ausführungsform des e Isolationsmaterials wird das hydrophobe Kleinstmaterial, insbesondere Aerogelgranulat oder poröses Oxidgranulat, teilweise oder vollständig von dem flexiblen Faserverbundmaterial, dem flexiblen Aerogel-Faser-Komposit, umschlossen. Das hydrophobe Granulat wird auf diese Weise von dem flexiblen Faserverbundmaterial eingeschlossen, sodass es nicht aus dem erfindungsgemäßen Isolationsmaterial nach außen treten kann. Das Isolationsmaterials weist dann beispielsweise eine Schichtstruktur auf mit einer äußeren Schicht (Hülle) aus flexiblem Faserverbundmaterial und einer inneren Schicht (Kern) aus hydrophobem Granulat. Das erfindungsgemäße Isolationsmaterial kann eine beliebige Geometrie aufweisen. Insbesondere kann das Isolationsmaterial die Form eines Kissens aufweisen, mit einer äußeren Hülle aus flexiblem Faserverbundmaterial und einer inneren Füllung aus hydrophobem Granulat. Eine besonders bevorzugte Ausführungsform ist eine äußere Hülle aus flexiblem Faser-Aerogel-Komposit und eine innere Füllung aus Aerogelgranulat oder porösem Oxidgranulat, beispielsweise in der Art eines Kissens.

Das erfindungsgemäße Isolationsmaterial kann insbesondere die Form eines flächigen Kissens aufweisen. Ein flächiges Kissen im Sinne der vorliegenden Erfindung ist ein Material aus einer äußeren Hülle aus flexiblem Faserverbundmaterial und einem inneren Kern aus hydrophobem Granulat, wobei das Material in einer Raumrichtung eine deutlich geringere Ausdehnung aufweist als in jeder der anderen beiden Raumrichtungen. Insbesondere kann das Verhältnis der Ausdehnung in einer Raumrichtung gegenüber der Ausdehnung in einer der beiden anderen Raumrichtungen 0,5 oder weniger, 0,1 oder weniger, bevorzugt 0,01 oder weniger, besonders bevorzugt 0,005 oder weniger, betragen. 0,5 als Verhältnis ist eher sehr zu groß, dient als mögliche Abgrenzung. Es wird angenommen, dass in der Praxis Verhältnisse vorzugsweise im engeren Bereich von 0,01 bis 0,1 liegen. 0,005 bedeutet eine enorme laterale Ausdehnung, da die Dicke nicht beliebig klein gewählt werden kann, da ansonsten sowohl akustische als auch thermische Leistungen nicht mehr gewährleistet werden können.

Ein Isolationsmaterial in Form eines flächigen Kissens ist besonders gut zur flächigen Isolation von umschlossenen Räumen beziehungsweise Wänden geeignet. Insbesondere kann das Material zur Isolation von Kabinenwänden im Flugzeugbau eingesetzt werden.

Das Isolationsmaterial kann in einer bevorzugten Ausführungsform in Form eines flächigen Kissens mit einer Dicke in einem Bereich von 5 bis 250 mm, bevorzugt 10 bis 100 mm, besonders bevorzugt 10 bis 40 mm, vorliegen. Die Breite und/oder Höhe des Kissens beträgt vorzugsweise 1000 bis 1500 mm, besonders bevorzugt 1000 bis 1200 mm, ganz besonders bevorzugt 1000 bis 1000 mm.

Das erfindungsgemäße Isolationsmaterial weist in einer bevorzugten Ausführungsform ein Flächengewicht in einem Bereich von 2 bis 6 kg/m², bevorzugt 2 bis 4 kg/m², besonders bevorzugt 2 bis 3 kg/m², auf.

Das erfindungsgemäße Isolationsmaterial weist in einer bevorzugten Ausführungsform eine thermische Isolierung von 32 - 24 mW / m K auf.

Das erfindungsgemäße Isolationsmaterial weist in einer bevorzugten Ausführungsform eine gute akustische Isolierung auf.

Die Einbettung beziehungsweise Fixierung eines hydrophoben Kleinstmaterial beziehungsweise Aerogelgranulats oder porösem Oxidgranulat in einem flexiblen Faserverbundmaterial hat den besonderen Vorteil, dass die Isolationseigenschaften des flexiblen Faserverbunds und des Granulats optimal kombiniert werden können. Besonderer Vorteil der Erfindung ist die Kombination von thermischer Isolierung durch flexibles Faserverbundmaterial und akustischer Isolierung durch Granulat.

Hierbei kommt der Flexibilität des Faserverbundmaterials als Fixierung für das Granulat eine besondere Bedeutung zu. Granulate weisen zwar gute akustische Isolationseigenschaften auf, benötigen jedoch eine mechanische Fixierung, da sie nicht formstabil sind, sondern fluide. Im Stand der Technik werden Granulate als Isolationsmaterial daher beispielsweise in Wabenstrukturen eingebracht. Die mechanische Fixierung des Granulats verhindert jedoch ein freies Schwingen der Granulatpartikel und schränkt deren akustische Isolation ein. Überraschenderweise hat sich gezeigt, dass die Fixierung mit einem flexiblen Faserverbundmaterial ein freies Schwingen der Granulatpartikel erlaubt, die damit ihre akustischen Isolationseigenschaften erhalten. Daher wird besonders bevorzugt ein flexibles Faserverbundmaterial eingesetzt, welches auch bei niedrigen Temperaturen ohne Versprödung seine Flexibilität beibehält und offenporig ist, um Wasseransammlung zu verhindern.

Das erfindungsgemäße Isolationsmaterial kann in einer bevorzugten Ausführungsform eine Strukturierung seiner äußeren Oberfläche aufweisen. So können beispielsweise akustische und technische Modifikationen wie akustisch wirksame Perforationen oder beispielsweise Kabelkanäle in das Isolationsmaterial eingebracht werden.

In einer weiteren bevorzugten Ausführungsform kann das erfindungsgemäße Isolationsmaterial auch eine innere Strukturierung aufweisen. Insbesondere kann das Isolationsmaterial in seinem Inneren aus einer oder mehreren Kammern bestehen, die jeweils ein hydrophobes Kleinstmaterial, insbesondere Aerogelgranulat oder porösem Oxidgranulat, enthalten. Durch die innere Strukturierung und Aufteilung in mehrere Kammern kann sichergestellt werden, dass das Granulat nicht zu stark verrutscht beziehungsweise einigermaßen gleichmäßig über die Fläche des Materials verteilt bleibt, gleichzeitig jedoch hinreichend flexibel zur akustischen Isolation bleibt. Die innere Struktur kann insbesondere dadurch gebildet sein, dass das flexible Fasermaterial an Nähten miteinander verbunden wird.

Als hydrophobes Granulat kann jedes im Stand der Technik bekannte Granulat eingesetzt werden, welches eine hydrophobe Oberfläche aufweist und zur akustischen Isolation geeignet ist. Das Material sollte weitestgehend thermisch stabil (brandfest) sein und über eine geringe Dichte verfügen. Kompakte (nicht Aerogel-Granulate) werden erwartungsgemäß nicht zu einer thermischen Isolationswirkung beitragen. Bevorzugt wird ein Aerogelgranulat oder ein poröses Oxidgranulat eingesetzt. Die Materialien zeigen insbesondere einen Kontaktwinkel von 150°. Das Granulat ist erfindungsgemäß hydrophob, um eine Wasseransammlung und Vereisung des Isolationsmaterial zu verhindern. Besonders geeignete Materialien umfassen (Aerogel-)Granulate mit einer Porosität von mindestens 90%, großen inneren Oberflächen im Bereich von bis zu 800 m²/g, Partikeldichten im Bereich von 120 kg/m³ (≠ Schüttdichte) und Partikelgrößen im Bereich von mehreren Mikrometern bis zu wenigen Zentimetern.

Als flexibles Faserverbundmaterial kann grundsätzlich jedes im Stand der Technik bekannte flexible Faserverbundmaterial eingesetzt werden. Grundgedanke ist eigentlich, dass auch die Hülle aus einem Aerogelverbund besteht, um so auch einen Beitrag zur Isolationswirkung (akustisch und thermisch) zu leisten. Vorteilhaft wäre ein hydrophobes Material um Beschädigung durch Wasser und/oder sonstige Einlagerung zu vermeiden. Insbesondere kann ein Faser-Aerogel-Komposit eingesetzt werden. Besonders bevorzugt ist ein interpenetrierendes Netzwerk wenigstens zweier Komponenten, aus einem makroporösen Fasernetzwerk, wobei die Fasern an den Berührungspunkten kraftschlüssig miteinander verbunden sind, und einem weiteren Netzwerk, insbesondere aus einem flexiblen Aerogel.

Erfindungswesentlich ist die Flexibilität des Materials, welche eine statische Fixierung des Granulats vermeidet. Die Flexibilität des Materials ist beispielsweise in Kompressionsversuchen wie in Rege & Vöpel et al. (loc. cit.) dargestellt durch Kompressionen bis zu 80% bei vollständiger Reversibilität auch bei erniedrigten Temperaturen zu belegen.

Ein geeignetes Faserverbundmaterial ist beispielsweise in EP 3 042 884 A1 beschrieben. Das flexible Faserverbundmaterial ist gebildet aus einem flexiblen Aerogel-Komposit, umfassend ein Silica-Aerogel, gebildet aus wenigstens einem difunktionellen Silan und wenigstens einem trifunktionellen Silan, und ein dreidimensionales makroporöses Fasernetzwerk, in dem die Fasern an den Berührungspunkten kraftschlüssig miteinander verbunden sind. Ein solches Faserverbundmaterial ist insbesondere stabil gegenüber Beanspruchung durch Zugkräfte und/oder Scherung und behält insbesondere auch bei niedrigen Temperaturen ohne Versprödung seine Flexibilität bei. Die Erfindung ist jedoch nicht auf das zuvor genannte Material beschränkt.

Ein difunktionelles Silan im Sinne der vorliegenden Erfindung ist ein Siloxan, welches zwei Alkoxy-Gruppen (OR') sowie zwei Alkyl-Gruppen (R) umfasst und in der folgenden Formel I schematisch gezeigt sind:

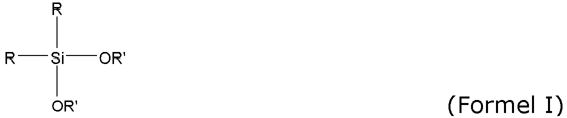

Dabei sind R und R' Alkylgruppen, die jeweils gleich oder voneinander verschieden sein können. Vorzugsweise sind die Alkylgruppen kurzkettig und weisen insbesondere bevorzugt 1 bis 3 Kohlenstoffatome auf. Besonders bevorzugt sind R und/oder R' ausgewählt aus Methyl und Ethyl. Besonders bevorzugt sind R und R' gleich. Difunktionelle Silane im Sinne der vorliegenden Erfindung sind beispielsweise Dimethoxydimethylsilan, Dimethoxydiethylsilan, Diethoxydimethylsilan oder Diethoxydiethylsilan.

Entsprechend sind trifunktionelle Silane im Sinne der vorliegenden Erfindung solche Silane, welche drei funktionelle Gruppen aufweisen, in welchen kurzkettige Kohlenwasserstoffreste über ein Sauerstoffatom an Silicium angebunden sind und der folgenden allgemeinen Formel II entsprechen, in welcher R und R' wie zu Formel I beschrieben ausgewählt werden:

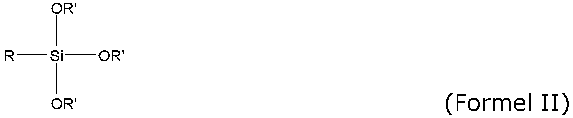

Auch hier ist ebenso wie bei den difunktionellen Silanen aufgrund der sterischen Freiheit keine Ausbildung eines starren Netzwerkes möglich, so dass sich hieraus eine Flexibilität des gebildeten Aerogels ergibt.

Es hat sich gezeigt, dass die Kombination aus einem Silica-Aerogel, welches aus wenigstens einem difunktionellen Silan und wenigstens einem trifunktionellen Silan gebildet ist, und einem dreidimensionalen makroporösen Fasernetzwerk zu einem flexiblen Komposit führt. Das Faserverbundmaterial ist sowohl im nassen als auch im trockenen Zustand zug- und scherfest. Durch die erhöhte mechanische Belastbarkeit im nassen sowie im trockenen Zustand ist die Darstellung von komplexen Geometrien möglich.

In einer Ausführungsform kann das Silica-Aerogel aus einem difunktionellen Silan bestehen. Es ist jedoch auch möglich unterschiedliche difunktionelle Silane einzusetzen. Ebenso ist es möglich, zur Ausbildung des Silica-Aerogels ein trifunktionelles Silan oder mehrere unterschiedliche trifunktionelle Silane einzusetzen. Bevorzugt wird das Silica-Aerogel aus einem difunktionellen Silan und einem trifunktionellen Silan gebildet. Besonders bevorzugt auf Grund der Reaktionskinetik zur Hydrolyse sind das difunktionelle Silan Dimethyldimethoxysilan und das trifunktionelle Silan Methyltrimethoxysilan. Bei längeren Alkylketten R beziehungsweise R' sinkt die Geschwindigkeit der Hydrolyse.

In einer bevorzugten Ausführungsform ist das Aerogel weiterhin aus einem tetrafunktionellen Silan gebildet. Es hat sich gezeigt, dass durch den Einsatz von difunktionellen, trifunktionellen und tetrafunktionellen Silanen zur Ausbildung eines Silica-Aerogels eine verbesserte Temperaturstabilität erreicht werden kann.

Tetrafunktionelle Silane im Sinne der vorliegenden Erfindung entsprechen der allgemeinen Formel III 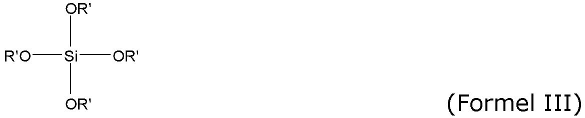 in welcher R' dieselbe Bedeutung wie zu den difunktionellen Silanen ausgeführt hat.

Vorzugsweise beträgt der Anteil an tetrafunktionellem Silan wenigstens 5 Mol% bezogen auf 100 Mol% an difunktionellem, trifunktionellem und tetrafunktionellem Silan. Ein Anteil von mehr als 10 Mol% tetrafunktionellem Silan führt dazu, dass die mechanischen Eigenschaften des Faserverbundmaterials nachteilig beeinflusst werden und ein sprödes Verhalten auftritt, welches mit zunehmendem Anteil an tetrafunktionellem Silan zum vorherrschenden Verhalten wird. Flexible Eigenschaften treten dann in den Hintergrund.

Das Stoffmengenverhältnis von trifunktionellem Silan zu difunktionellem Silan liegt im Bereich von 2:1 bis 1:1. Wird der Stoffmengenanteil des difunktionellen Silans weiter gesteigert, erfolgt keine vollständige Gelation. Das Gewichtsverhältnis von trifunktionellem Silan zu difunktionellem Silan beträgt vorzugsweise 1:0,59.

Der bevorzugte flexible Aerogel-Komposit umfasst weiterhin ein dreidimensionales makroporöses Fasernetzwerk. Die Fasern sind hier an den Berührungspunkten kraftschlüssig miteinander verbunden. Das Fasernetzwerk weist vorzugsweise eine Porengröße von 0,5 mm oder mehr auf. Insbesondere eine solch große Porengröße ermöglicht die bevorzugten Eigenschaften des Faserverbundmaterials. Dabei sollte die Porengröße 5 mm nicht überschreiten damit ein stabiles Faserverbundmaterial erhalten wird. Das Leervolumen des dreidimensionalen Fasernetzwerkes beträgt vorzugsweise 95 Vol.-% oder mehr, insbesondere 97 Vol.-% oder mehr, besonders bevorzugt 99 Vol.-%.

Das Fasernetzwerk ist beispielsweise ausgewählt aus der Gruppe, die Gewebe, Gestricke, Gewirke, Vliese, Filze und Tuftings umfasst. Diese können beispielsweise aus Polymerfasern bestehen, wie beispielsweise Polyester oder Polyamidfasern. Es ist auch möglich sogenannte BiCo-Fasern einzusetzen, welche aus einem Kern aus einem Material und einer Hülle aus einem davon verschiedenen Material bestehen. Beispielsweise kann es sich hierbei um mit einem Polymer beschichtete Glasfasern handeln. Es ist auch möglich BiCo-Fasern einzusetzen, die aus unterschiedlichen polymeren Materialen bestehen. Vorzugsweise hat hier das Polymer, welche die Hülle bildet, einen geringeren Schmelzpunkt als das Polymer des Kerns. Hierdurch kann ermöglicht werden, dass durch ein leichtes Erwärmen die äußere Hülle sich in ihren Eigenschaften ändert und an den Überschneidungspunkten einzelner Fasern diese miteinander verkleben, so dass eine kraftschlüssige Verbindung an den Berührungspunkten gegeben ist.

Eine kraftschlüssige Verbindung ist somit im Gegensatz zu rein formschlüssigen Verbindungen anzusehen, in welchen Fasern eines Fasernetzwerks an den Berührungspunkten lediglich mechanisch miteinander verbunden sind.

Das Aerogel des bevorzugten Faserverbundmaterials weist bevorzugt eine Teilchengröße im Bereich von 1 bis 10 µm, insbesondere von 2 bis 8 µm, besonders von 4 bis 5,5 µm auf. Die Größe der Teilchen wird mittels elektronenmikroskopischer Aufnahmen, wie Rasterelektronenmikroskopie (REM) oder Transmissionselektronenmikroskopie (TEM), bestimmt. Der Porendurchmesser beträgt vorzugsweise 15 µm oder weniger, insbesondere 12 µm oder weniger und/oder 2 µm oder mehr, bevorzugt 5 µm oder mehr. Besonders bevorzugt beträgt der Porendurchmesser etwa 10 µm.

Die Rohdichte mit Luft beträgt bevorzugt 0,1 g/cm³. Die skelettale Dichte liegt unterhalb der von solidem Quarz und beträgt bevorzugt 1,8 g/cm³. Es hat sich gezeigt, dass ein Komposit mit besonders guten Eigenschaften erhalten wird, wenn das Aerogel die genannten Teilchengröße, Porendurchmesser und bevorzugt auch Dichte aufweist.

Die Herstellung eines geeigneten flexiblen Faserverbundmaterials für das erfindungsgemäße Isolationsmaterial ist beispielsweise in den Absätzen [0044] bis [0055] der Druckschrift EP 3 042 884 A1 beschrieben, die durch ausdrückliche Bezugnahme in die vorliegende Offenbarung einbezogen sind.

In einer alternativen Ausführungsform wird die der vorliegenden Erfindung zugrunde liegende Aufgabenstellung gelöst durch ein Verfahren zur Herstellung eines Isolationsmaterial, umfassend die folgenden Schritte:
a) Herstellen eines flexiblen Faserverbundmaterials
b) Ausbilden eines Hohlraums, der von dem flexiblen Faserverbundmaterial zumindest teilweise umschlossen wird
c) Einbringen eines hydrophoben Granulats in den Hohlraum
d) Verbinden des flexiblen Faserverbundmaterials, sodass das hydrophobe Granulat vollständig von flexiblem Faserverbundmaterial umschlossen wird.

Mit dem erfindungsgemäßen Verfahren wird ein erfindungsgemäßes Isolationsmaterial insbesondere in Form eines Kissens hergestellt. Als flexibles Faserverbundmaterial und hydrophobes Granulat können die zuvor beschriebenen Materialien eingesetzt werden. Sämtliche zuvor beschriebenen Materialien können im Rahmen des erfindungsgemäßen Verfahrens kombiniert werden.

Das flexible Faserverbundmaterial kann vorzugsweise in Schritt a) hergestellt werden, indem ein Sol mit einem Aerogelprecursor mit einem dreidimensionalen Fasernetzwerk in Kontakt gebracht und anschließend geliert wird, insbesondere bei einer gegenüber Raumtemperatur erhöhten Temperatur. Ein Faserverbundmaterial kann durch anschließende Trocknung erhalten werden, optional nach vorherigem Austausch des Lösungsmittels.

Im Allgemeinen können Materialien wie das Faserverbundmaterial in einem Ofen hergestellt werden. Im Rahmen der vorliegenden Erfindung erfolgt die Herstellung in einer besonderen Ausführungsform in einem großflächigen beheizten Container, welcher eine Unabhängigkeit der Herstellung von irgendwelchen Ofengeometrien gewährleistet.

Das Faserverbundmaterial kann beispielsweise als flächige Matte ausgebildet werden. In Schritt b) des Verfahrens können insbesondere zwei flächige Matten des Faserverbundmaterials aufeinandergelegt werden und an ihren Seiten teilweise verbunden werden, beispielsweise durch Vernähen oder durch flächiges Steppen in Anschluss an Schritt c). Letzteres sichert das innenliegende Granulat auch gegen eventuelles Verrutschen. In den so gebildeten Hohlraum in Form einer Tasche kann in Schritt c) das hydrophobe Kleinstmaterial, insbesondere ein hydrophobes Aerogelgranulat oder ein poröses Oxidgranulat, eingebracht werden. Im Schritt d) können dann die aufeinanderliegenden mit dem Granulat gefüllten Faserverbundmatten an den noch offenen Seiten ebenfalls verbunden werden, sodass das Granulat in Form eines Kissens in dem Faserverbundmaterial eingeschlossen wird. Die Erfindung ist jedoch nicht auf diese Vorgehensweise beschränkt. So kann beispielsweise auch in Schritt b) das Faserverbundmaterial ohne feste Verbindung so geformt werden, dass das Granulat in Schritt c) in einen Hohlraum eingebracht werden kann, der anschließend in Schritt d) durch Verbinden des Faserverbundmaterials verschlossen wird.

Das so hergestellte Isolationsmaterial kann durch weitere Verbindungen des Faserverbundmaterials in mehrere Einheiten unterteilt werden. Insbesondere kann der Hohlraum, in dem das hydrophobe Granulat enthalten ist, in getrennte Hohlräume unterteilt werden. Wenn das Isolationsmaterials in Form eines Kissens vorliegt, kann das Kissen durch Nähte/Versteppungen unterteilt werden, um das Verrutschen des Granulats im Kissen zu verhindern.

Das Faserverbundmaterial kann insbesondere in einem beheizbaren Container hergestellt werden, der zwei gegenüberliegende flächige Rahmen umfasst, die durch Abstandsrahmen nach außen abgeschlossen sind. Auf diese Weise kann ein flächiges Faserverbundmaterial in Form einer Matte erhalten werden. Die Oberfläche der Matte wird durch die Oberfläche des Rahmens beziehungsweise der Innenwand des beheizbaren Containers gebildet. Auf diese Weise kann über die Strukturierung der Innenwand des Containers die Oberfläche des Faserverbundmaterials und damit die Oberfläche des erfindungsgemäßen Isolationsmaterials strukturiert werden.

In den Container wird ein Füllstoff in Form eines Fasermaterials als Verstärkung eingebracht. Als Füllstoff beziehungsweise Fasermaterial kann insbesondere ein Vlies oder Gewebe, Gestricke, Gewirke, Vliese, Filze und Tuftings eingesetzt werden. Das Fasermaterial kann gezielt in dem Container positioniert werden. Anschließend wird in den Container eine Lösung, insbesondere eine Aerogelprecursorlösung beziehungsweise ein Sol, eingebracht. Durch die beheizbaren Wände wird die Lösung zur Reaktion gebracht. Nach der Gelation kann das Faserverbundmaterial aus dem Rahmen entnommen werden und einem Waschprozess zugeführt werden.

Durch die frei wählbare Oberflächenstrukturierung können akustische und technische Modifikationen wie akustisch wirksame Perforationen oder beispielsweise Kabelkanäle in das Isolationsmaterial eingebracht werden. Durch die neue Art der Herstellung und die glatte Oberfläche zeigen die Materialien ein besseres Zugverhalten. Die präzise Positionierung eines Füllstoffs durch den individualisierbaren Rahmen führt zu einer weiteren Verstärkung des Materials unter Erhalt der glatten Oberfläche. Durch den Positionierungsrahmen können gezielt akustische Elemente in das Material eingebaut werden.

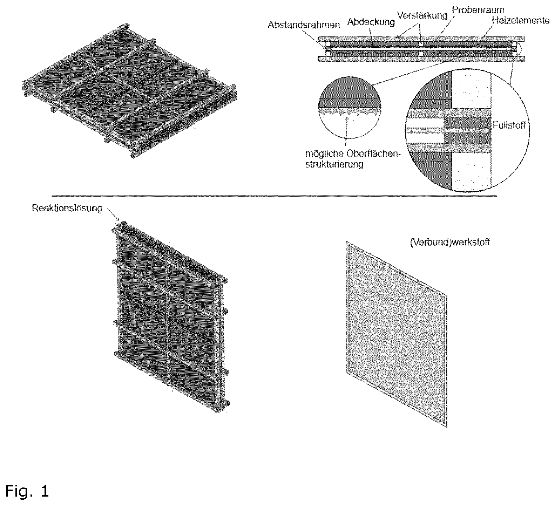

In Fig. 1 ist ein beheizbarer Container zur Herstellung der Materialien mit einer sehr glatten Oberfläche beispielhaft dargestellt. Die Abdeckplatten können makroskopisch strukturiert werden, um so eine Perforierung und/oder Prägung in den Werkstoff einzubringen. Das makroskopische Erscheinungsbild der Oberfläche der Probe bleibt jedoch sehr glatt, was zu verbesserten Zugbeständigkeiten führt. Durch Einspannungen in den Rahmen können unterschiedliche Arten von Verstärkungen erzielt werden. So kann der Füllstoff beziehungsweise ein Fasermaterial präzise im Bauteil platziert werden (zum Beispiel mittig) und der Verbleib im Verbund bleibt erhalten.

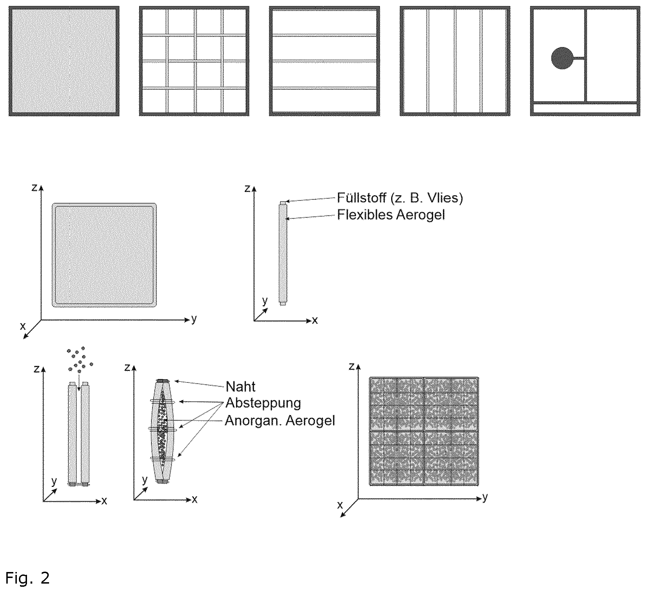

Fig. 2 beschreibt beispielhaft die Verbindung der hergestellten Matten mit einem Aerogelgranulat zu einem Kissen. Regelmäßige horizontale und vertikale Nähte/Absteppungen können ein Verrutschen der Granulate im Kissen verhindern. Durch Kombination mehrerer Kissen können großflächige Bereiche isoliert werden. Die in den Kissen befindlichen Granulate können sich frei bewegen und so akustische Wirkung entfalten. Die Struktur des äußeren Aerogelverbunds verhindert das Austreten von Granulatstäuben.

In einer alternativen Ausführungsvariante können die Schritte a) und b) des erfindungsgemäßen Verfahrens kombiniert werden. So kann beispielsweise ein Faserverbundmaterial mit einem Hohlraum, insbesondere in Form einer Tasche, in einem Schritt in einem Container wie zuvor beschrieben hergestellt werden. Dabei kann ein Container mit zwei gegenüberliegenden Rahmen und einem weiteren Rahmen in der Mitte zum Einsatz kommen, der als Platzhalter zur Ausbildung eines Hohlraums dient. Der innere Rahmen kann gegebenenfalls mit einem Füllstoff beziehungsweise Fasermaterial bespannt werden und anschließend die Vorrichtung montiert und die Lösung eingefüllt werden. Nach Gelation und Trocknung wird ein Faserverbundmaterial in Form einer Tasche erhalten, welches anschließend mit Granulat gefüllt und verschlossen werden kann, sodass ein erfindungsgemäßes Isolationsmaterial in Form eines Kissens entsteht.

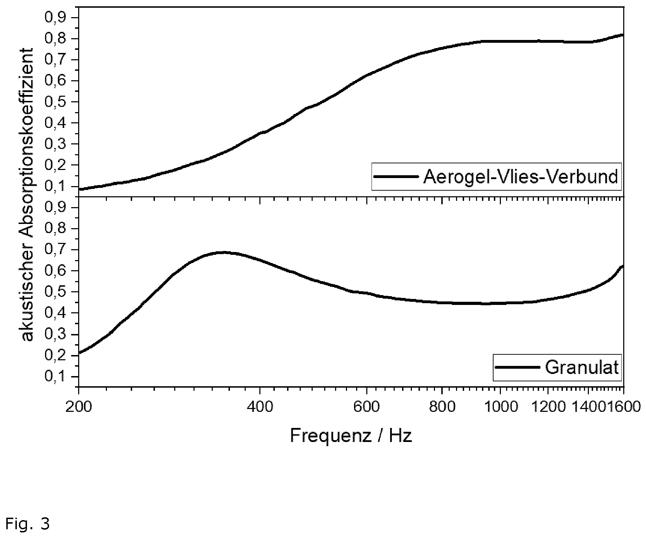

Messungen der akustischen Absorption zeigen, dass vliesverstärkte, unverstärkte Aerogele und Aerogelgranulate deutlich unterschiedliche Absorptionseigenschaften ausweisen. Die Messungen sind in Fig. 3 dargestellt. Hierbei wurden jeweils die beiden Materialien in einem Impedanzrohr vermessen, um das akustische Verhalten im gezeigten Frequenzbereich zu bestimmen. Die Kombination dieser Materialien ermöglicht eine gezielte Einstellung der Eigenschaften. Der beschriebene multifunktionale Rahmen ermöglicht das gezielte Einbringen von Verstärkungselementen und daraus folgend eine lokal beeinflussbare Materialeigenschaft.

In einer weiteren alternativen Ausführungsform wird die erfindungsgemäße Aufgabenstellung gelöst durch die Verwendung eines Isolationsmaterial, umfassend ein hydrophobes Granulat und ein flexibles Faserverbundmaterial, zur thermischen und/oder akustischen Isolation. Das verwendete Isolationsmaterial kann sämtliche Merkmale aufweisen wie das zuvor beschriebene erfindungsgemäße Isolationsmaterial.

Bevorzugt ist die Verwendung in allen Bereichen der thermischen (insbesondere Kälte) und Schallisolation, in denen (Luft-) Feuchtigkeit gravierenden Einfluss auf die Isolationsleistung haben könnte. In einer bevorzugten Ausführungsform wird das Isolationsmaterial in luftfahrtrelevanten Isolationen verwendet.

### Ausführungsbeispiele

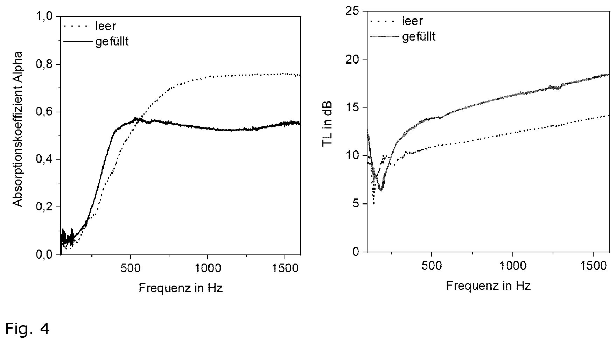

Als Ausführungsbeispiel werden die unten dargestellten Messungen aufgeführt. In Fig. 3 sind die akustischen Absorptionskoeffizienten der verwendeten Materialien unabhängig voneinander dargestellt. Hierzu wurden kreisrunde Proben aus dem Faserverbundmaterial, wie es für die Einhüllung vorgesehen ist, herausgeschnitten und in einem Impedanzrohr vermessen. Das für die Füllung angedachte Granulat (in diesem Fall Silica-basiertes Aerogelgranulat mit einer Partikelgröße bis 0,5 mm) wurde in einem Pulverprobenträger mit dünnen Decklagen versehen und ebenfalls in einem Impedanzrohr vermessen. Die Messungen zeigen die deutlich unterschiedlichen Absorptionsbereiche der beiden Komponenten. Abhängig vom Füllungsmaterial kann das Absorptionsmaximum eingestellt werden. In Abbildung 4 sind Absorptionskoeffizient- und Transmission-Loss-Ergebnisse eines Impedanzrohrversuchs dargestellt. Um die Eigenschaften eines Kissens (mit und ohne Füllung) abzubilden, wurden in diesem Versuch jeweils 2 kreisrunde Proben des Hüllenmaterials mit einem Distanzring als "leer" vermessen. Die mit "gefüllt" markierten Messungen bestanden aus eben diesen beiden Deckschickten des Hüllenmaterials mit einer raumausfüllenden Granulatfüllung im Bereich des Distanzrings.

Die Isolationseigenschaften wurden für das hergestellte erfindungsgemäße Isolationsmaterial in Form eines Kissens sowie für das leere Faserverbundmaterial ohne Granulatfüllung bestimmt. In Fig. 4 ist auf der linken Seite der gemessene Absorptionskoeffizient als Funktion der Frequenz dargestellt. Es ist sichtbar, dass durch die Granulatfüllung die Absorptionseigenschaften im Bereich geringerer Frequenzen (Zielgröße) optimiert werden konnte. Auf der rechten Seite von Fig. 4 ist das Transmission Loss als Funktion der Frequenz für das gefüllte und das leere Kissen dargestellt. Es zeigt sich, dass auch das Transmission Loss (also die eigentliche Dämpfung im Material) durch die erfindungsgemäße Granulatfüllung um bis zu 5 dB zunimmt.

## Patentansprüche

1. Isolationsmaterial, umfassend ein hydrophobes Granulat und/oder hydrophobe Fasern und ein flexibles Faserverbundmaterial, wobei das Granulat und/oder die Fasern von dem flexiblen Faserverbundmaterial teilweise oder vollständig umschlossen wird;
das flexible Faserverbundmaterial ein flexibles Faser-Aerogel-Komposit umfasst oder daraus besteht; und
das flexible Faser-Aerogel-Komposit ein Silica-Aerogel, gebildet aus wenigstens einem difunktionellen Silan und wenigstens einem trifunktionellen Silan, und ein dreidimensionales Netzwerk, in dem die Fasern an den Berührungspunkten kraftschlüssig miteinander verbunden sind, umfasst, wobei das Stoffmengenverhältnis von trifunktionellem Silan zu difunktionellem Silan im Bereich von 2:1 bis 1:1 liegt.

2. Isolationsmaterial nach Anspruch 1, wobei das Isolationsmaterial in Form eines flexiblen flächigen Kissens vorliegt und das flexible Faserverbundmaterial eine flexible Hülle bildet, die einen von dem Granulat und/oder den Fasern gebildeten Kern umschließt.

3. Isolationsmaterial nach einem der Ansprüche 1 oder 2 , wobei das Granulat ein Aerogelgranulat und/oder Aerogel-Aerogelverbund oder poröses Oxidgranulat umfasst oder daraus besteht.

4. Isolationsmaterial nach Anspruch 3, wobei das Aerogelgranulat ausgewählt ist aus hydrophobem Metalloxidaerogel und/oder Aerogel-Aerogelverbundpartikeln.

5. Isolationsmaterial nach einem der Ansprüche 1 oder 2, wobei die Fasern Aerogelfasern und/oder Aerogel-Aerogelfasern umfassen oder daraus bestehen.

6. Isolationsmaterial nach einem der Ansprüche 1 bis 5, wobei das flexible Faserverbundmaterial eine reversible Kompression von mindestens 80% zulässt.

7. Isolationsmaterial nach einem der Ansprüche 1 bis 6, wobei das Silica-Aerogel weiterhin aus einem tetrafunktionellen Silan ausgebildet ist, wobei vorzugsweise dieser Anteil nicht mehr als 10 Mol% bezogen auf 100 Mol% an difunktionellem, trifunktionellem und tetrafunktionellem Silan ist.

8. Isolationsmaterial nach einem der Ansprüche 1 bis 7, wobei das Fasernetzwerk eine Porengröße von 0,5 mm oder mehr aufweist.

9. Verfahren zur Herstellung eines Isolationsmaterials nach einem der Ansprüche 1 bis 8, umfassend die folgenden Schritte:
a) Herstellen des flexiblen Faserverbundmaterials, wobei ein Sol mit einem Aerogelprecursor hergestellt wird und das Sol anschließend mit einem dreidimensionalen Fasernetzwerk in Kontakt gebracht wird und anschließend, insbesondere bei erhöhter Temperatur, geliert und getrocknet wird
b) Ausbilden eines Hohlraums, der von den flexiblen Faserverbundmaterial zumindest teilweise umschlossen wird,
c) Einbringen des hydrophoben Granulats in den Hohlraum und
d) Verbinden des flexiblen Faserverbundmaterials, sodass das hydrophobe Granulat vollständig von flexiblem Faserverbundmaterial umschlossen wird.

10. Verfahren gemäß Anspruch 9, wobei das Faserverbundmaterial in Schritt a) in einem beheizbaren Container hergestellt wird, wobei der Container zwei gegenüberliegende beheizbare flächige Rahmen umfasst, die durch Abstandsrahmen nach außen abgeschlossen sind und wobei in den Container ein Fasermaterial eingebracht wird und anschließend ein Sol mit einem Aerogelprecursor eingefüllt wird, durch die beheizbaren Rahmen zur Gelation gebracht wird und das Faserverbundmaterial anschließend aus dem Container entnommen wird.

11. Verfahren gemäß Anspruch 10, wobei die Schritte a) und b) in einem Schritt kombiniert werden, indem in den beheizbaren Container ein innerer Rahmen eingebracht wird, der während der Gelation und Ausbildung des Faserverbundmaterials als Platzhalter dient, sodass ein Faserverbundmaterial, das einen Hohlraum teilweise umschließt, in einem Schritt erhalten wird.

12. Verwendung eines Isolationsmaterials nach einem der Ansprüche 1 bis 8 zur thermischen und/oder akustischen Isolation, insbesondere in Luftfahrzeugen.

## Claims

1. An insulation material comprising a hydrophobic granulate and/or hydrophobic fibres and a flexible fibre composite material, wherein the granulate and/or the fibres are partially or completely enclosed by the flexible fibre composite material;
wherein the flexible fibre composite material comprises or consists of a flexible fibre-aerogel composite; and
wherein the flexible fibre-aerogel composite comprises a silica aerogel formed from at least one difunctional silane and at least one trifunctional silane, and a three-dimensional network in which the fibres are frictionally connected to one another at the points of contact, wherein the molar ratio of trifunctional silane to difunctional silane is in the range of 2:1 to 1:1.

2. The insulation material according to claim 1, wherein the insulation material is in the form of a flexible planar cushion and the flexible fibre composite material forms a flexible shell enclosing a core formed by the granulate and/or the fibres.

3. The insulation material according to claim 1 or 2, wherein the granulate comprises or consists of an aerogel granulate and/or an aerogel-aerogel composite or a porous oxide granulate.

4. The insulation material according to claim 3, wherein the aerogel granulate is selected from hydrophobic metal oxide aerogel and/or aerogel-aerogel composite particles.

5. The insulation material according to claim 1 or 2, wherein the fibres comprise or consist of aerogel fibres and/or aerogel-aerogel fibres.

6. The insulation material according to any one of claims 1 to 5, wherein the flexible fibre composite material permits reversible compression of at least 80%.

7. The insulation material according to any one of claims 1 to 6, wherein the silica aerogel is further formed from a tetrafunctional silane, wherein preferably the proportion thereof is not more than 10 mol% based on 100 mol% of difunctional, trifunctional and tetrafunctional silane.

8. The insulation material according to any one of claims 1 to 7, wherein the fibre network has a pore size of 0.5 mm or more.

9. A method for producing an insulation material according to any one of claims 1 to 8, comprising the following steps:
a) producing the flexible fibre composite material, wherein a sol containing an aerogel precursor is prepared and the sol is subsequently brought into contact with a three-dimensional fibre network and is subsequently gelled, in particular at an elevated temperature, and dried;
b) forming a cavity which is at least partially enclosed by the flexible fibre composite material;
c) introducing the hydrophobic granulate into the cavity; and
d) joining the flexible fibre composite material such that the hydrophobic granulate is completely enclosed by the flexible fibre composite material.

10. The method according to claim 9, wherein the fibre composite material is produced in step a) in a heatable container, wherein the container comprises two opposing heatable planar frames which are closed off externally by spacer frames, and wherein a fibre material is introduced into the container, a sol containing an aerogel precursor is subsequently introduced, the sol is caused to gel by the heatable frames and the fibre composite material is subsequently removed from the container.

11. The method according to claim 10, wherein steps a) and b) are combined in one step by introducing into the heatable container an inner frame which serves as a placeholder during the gelation and formation of the fibre composite material, such that a fibre composite material partially enclosing a cavity is obtained in one step.

12. Use of an insulation material according to any one of claims 1 to 8 for thermal and/or acoustic insulation, in particular in aircraft.

## Revendications

1. Matériau d'isolation, comprenant un granulat hydrophobe et/ou des fibres hydrophobes et un matériau composite à fibres flexible, dans lequel le granulat et/ou les fibres sont partiellement ou totalement entourés par le matériau composite à fibres flexible ;
ledit matériau composite à fibres flexible comprend ou consiste en un composite flexible aérogel-fibres ; et
ledit composite flexible aérogel-fibres comprend un aérogel de silice formé à partir d'au moins un silane difonctionnel et d'au moins un silane trifonctionnel et un réseau tridimensionnel dans lequel les fibres sont reliées entre elles par adhérence aux points de contact, dans lequel le rapport molaire du silane trifonctionnel au silane difonctionnel est compris dans la gamme de 2 : 1 à 1 : 1.

2. Matériau d'isolation selon la revendication 1, dans lequel ledit matériau d'isolation se présente sous la forme d'un coussin plat et flexible, et ledit matériau composite à fibres flexible forme une enveloppe flexible qui entoure un noyau formé par les granulés et/ou les fibres.

3. Matériau d'isolation selon l'une des revendications 1 ou 2, dans lequel ledit granulat comprend ou consiste en un granulat d'aérogel et/ou un composite aérogel-aérogel ou un granulat d'oxyde poreux.

4. Matériau d'isolation selon la revendication 3, dans lequel ledit granulat d'aérogel est choisi parmi un aérogel d'oxyde métallique hydrophobe et/ou des particules de composite aérogel-aérogel.

5. Matériau d'isolation selon l'une des revendications 1 ou 2, dans lequel lesdites fibres comprennent ou consistent en des fibres d'aérogel et/ou des fibres aérogel-aérogel.

6. Matériau d'isolation selon l'une quelconque des revendications 1 à 5, dans lequel ledit matériau composite à fibres flexible permet une compression réversible d'au moins 80 %.

7. Matériau d'isolation selon l'une quelconque des revendications 1 à 6, dans lequel ledit aérogel de silice est formé en outre à partir d'un silane tétrafonctionnel, cette proportion ne dépassant de préférence pas 10 % molaire par rapport à 100 % molaire de silane difonctionnel, trifonctionnel et tétrafonctionnel.

8. Matériau d'isolation selon l'une quelconque des revendications 1 à 7, dans lequel ledit réseau de fibres présente une taille des pores qui est 0,5 mm ou plus.

9. Procédé pour préparer un matériau d'isolation selon l'une quelconque des revendications 1 à 8, comprenant les étapes suivantes consistant à :
a) préparer le matériau composite à fibres flexible, dans lequel un sol avec un précurseur d'aérogel est préparé, et le sol est ensuite mis en contact avec un réseau de fibres tridimensionnel, et puis gélifié et séché, notamment à température élevée,
b) former une cavité qui est au moins partiellement entouré par le matériau composite à fibres flexible,
c) introduire le granulat hydrophobe dans la cavité, et
d) relier le matériau composite à fibres flexible, de manière que le granulat hydrophobe soit complètement entouré du matériau composite à fibres flexible.

10. Procédé selon la revendication 9, dans lequel ledit matériau composite à fibres est préparé à l'étape a) dans un conteneur chauffable, le conteneur comprenant deux cadres plans chauffables opposés, fermés vers l'extérieur par des cadres d'espacement, et dans lequel un matériau fibreux est introduit dans le conteneur, puis un sol contenant un précurseur d'aérogel y est versé, le tout est amené à gélification grâce à des cadres chauffables, et le matériau composite de fibres est ensuite retiré du conteneur.

11. Procédé selon la revendication 10, dans lequel les étapes a) et b) sont combinées dans une seule étape, en introduisant dans le conteneur chauffable un cadre interne qui sert de maintien d'espace pendant la gélification et la formation du matériau composite à fibres, de manière qu'un matériau composite à fibres entourant partiellement une cavité soit obtenu dans une seule étape.

12. Utilisation d'un matériau d'isolation selon l'une quelconque des revendications 1 à 8 pour l'isolation thermique et/ou acoustique, notamment dans les véhicules aériens.
